(19) Europäisches Patentamt
European Patent Office
Office européen des brevets

(11) EP 1 396 739 B1

(12) **EUROPÄISCHE PATENTSCHRIFT**

(45) Veröffentlichungstag und Bekanntmachung des Hinweises auf die Patenterteilung:
**02.01.2008 Patentblatt 2008/01**

(51) Int Cl.:
*G02B 5/30* (2006.01)    *G02B 27/10* (2006.01)
*G02B 27/28* (2006.01)    *G01N 21/64* (2006.01)
*G01N 21/47* (2006.01)    *G01N 15/14* (2006.01)
*G02B 21/06* (2006.01)

(21) Anmeldenummer: 03016370.3

(22) Anmeldetag: **19.07.2003**

(54) **Verfahren und Anordnung zur einstellbaren Veränderung von Beleuchtungslicht und/oder Probenlicht bezüglich seiner spektralen Zusammensetzung und/oder Intensität**

Method and arrangement for adjustable modulation of spectral composition and/or intensity of pump light and/or probe light

Méthode et arrangement pour la modulation ajustable de la constitution spectrale et/ou de l'intensité de lumière de l'éclairage et/ou de lumière sonde

(84) Benannte Vertragsstaaten:
**AT BE BG CH CY CZ DE DK EE ES FI FR GB GR HU IE IT LI LU MC NL PT RO SE SI SK TR**

(30) Priorität: **04.09.2002 DE 10241472**

(43) Veröffentlichungstag der Anmeldung:
**10.03.2004 Patentblatt 2004/11**

(60) Teilanmeldung:
**07021968.8**

(73) Patentinhaber: **CARL ZEISS JENA GmbH**
**07745 Jena (DE)**

(72) Erfinder: **Wolleschensky, Ralf**
**07743 Jena (DE)**

(56) Entgegenhaltungen:
**WO-A-01/20381**        **WO-A-98/35251**
**DE-A- 19 842 288**     **US-A1- 2002 044 328**
**US-B1- 6 285 500**     **US-B1- 6 441 934**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung bezieht sich auf ein Verfahren in der Mikroskopie, insbesondere der Fluoreszenzmikroskopie, der Laser Scanning Mikroskopie, der Fluoreszenz-Korrelationsspektroskopie und der Scanning Nahfeldmikroskopie, zur Untersuchung von vorwiegend biologischen Proben, Präparaten und zugehörigen Komponenten. Mit eingeschlossen sind auf Fluoreszenzdetektion basierende Verfahren zum Screenen von Wirkstoffen (High Throuput Sceening). Simultan-Untersuchungen von Proben mit Mehrfachfluorophoren in Echtzeit durch eine simultane Beleuchtung der Probe in mehreren Probenpunkten werden damit bei überlappenden Fluoreszenzspektren auch in räumlichen Strukturen von dicken Proben möglich.

Ein klassisches Anwendungsgebiet der Lichtmikroskopie zur Untersuchung von biologischen Präparaten ist die Fluoreszenzmikroskopie (Lit.: Pawley, "Handbook of biological confocal Microscopy"; Plenum Press 1995). Hierbei werden bestimmte Farbstoffe zur spezifischen Markierung von Zellteilen verwendet.

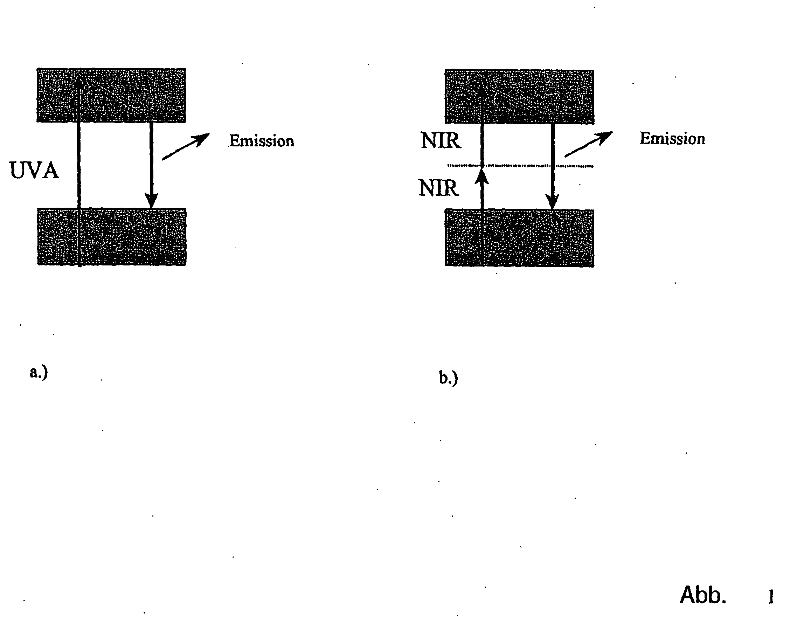

Die eingestrahlten Photonen einer bestimmten Energie regen die Farbstoffmoleküle durch die Absorption eines Photons aus dem Grundzustand in einen angeregten Zustand an. Diese Anregung wird meist als Einphotonen-Absorption bezeichnet (Abb. 1a). Die so angeregten Farbstoffmoleküle können auf verschiedene Weise in den Grundzustand zurückgelangen. In der Fluoreszenzmikroskopie ist der Übergang unter Aussendung eines Fluoreszenzphotons am wichtigsten. Die Wellenlänge des emittierten Photons ist aufgrund der Stokesverschiebung im Vergleich zur Anregungsstrahlung generell rot verschoben, besitzt also eine größere Wellenlänge. Die Stokesverschiebung ermöglicht die Trennung der Fluoreszenzstrahlung von der Anregungsstrahlung.

Das Fluoreszenzlicht wird mit geeigneten dichroitischen Strahlteilern in Kombination mit Blockfiltern von der Anregungsstrahlung abgespalten und getrennt beobachtet. Dadurch ist die Darstellung einzelner, mit verschiedenen Farbstoffen eingefärbten Zellteilen, möglich. Grundsätzlich können jedoch auch mehrere Teile eines Präparates gleichzeitig mit verschiedenen sich spezifisch anlagernden Farbstoffen eingefärbt werden (Mehrfachfluoreszenz). Zur Unterscheidung, der von den einzelnen Farbstoffen ausgesendeten Fluoreszenzsignale, werden wiederum spezielle dichroitischen Strahlteiler verwendet.

Neben der Anregung der Farbstoffmoleküle mit einem hoch energetischen Photon (Einphotonen-Absorption) ist auch eine Anregung mit mehreren Photonen geringerer Energie möglich (Abb. 1b). Die Summe der Energien der Einzelphotonen entspricht hierbei ungefähr einem Vielfachen des hochenergetischen Photons. Diese Art der Anregung der Farbstoffe wird als Mehrphotonen-Absorption bezeichnet (Lit.: Corle, Kino; "Confocal Scanning Optical Microscopy and Related Imaging Systems"; Academic Press 1996). Die Farbstoffemission wird durch diese Art der Anregung jedoch nicht beeinflußt, d.h. das Emissionsspektrum erfährt bei der Mehrphotonen-Absorption einen negativen Stokesshift, besitzt also eine geringere Wellenlänge im Vergleich zur Anregungsstrahlung. Die Trennung der Anregungs- von der Emissionsstrahlung erfolgt in der gleichen Art und Weise wie bei der Einphotonen-Absorption.

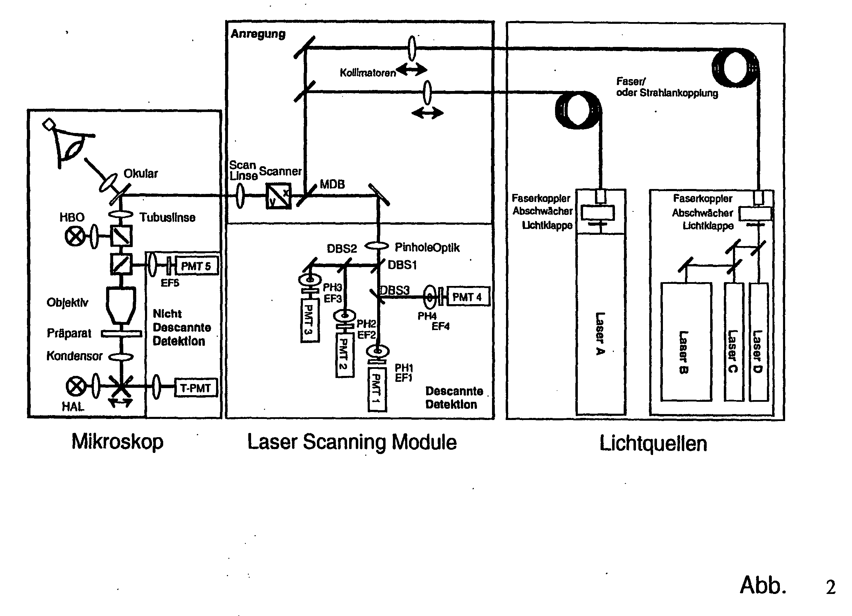

Der Stand der Technik soll im folgenden beispielhaft anhand eines konfokalen Laser-Scanning- Mikroskopes (LSM) erläutert werden (Abb. 2).

Ein LSM gliedert sich im wesentlichen in 4 Module: Lichtquelle, Scanmodul, Detektionseinheit und Mikroskop. Diese Module werden im folgenden näher beschrieben. Es wird zusätzlich auf DE19702753A1 verwiesen.

Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Die Anregungsstrahlung wird im Lichtquellenmodul erzeugt. Zum Einsatz kommen hierbei verschiedene Laser (Argon, Argon Krypton, TiSa-Laser). Weiterhin erfolgt im Lichtquellenmodul die Selektion der Wellenlängen und die Einstellung der Intensität der benötigten Anregungswellenlänge, z.B. durch den Einsatz eines akusto-optischen Kristalls. Anschließend gelangt die Laserstrahlung über eine Faser oder eine geeignete Spiegelanordnung in das Scanmodul.

Die in der Lichtquelle erzeugte Laserstrahlung wird mit Hilfe des Objektivs beugungsbegrenzt über die Scanner, die Scanoptik und die Tubuslinse in das Präparat fokussiert. Die Scanner rastern punktförmig die Probe in x-y-Richtung ab. Die Pixelverweilzeiten beim Scannen über die Probe liegen meist im Bereich von weniger als einer Mikrosekunde bis zu einigen Sekunden.

Bei einer konfokalen Detektion (descanned Detektion) des Fluoreszenzlichtes, gelangt das Licht, das aus der Fokusebene (Specimen) und aus den darüber- und darunterliegenden Ebenen emittiert wird, über die Scanner auf einen dichroitischen Strahlteiler (MDB). Dieser trennt das Fluoreszenzlicht vom Anregungslicht. Anschließend wird das Fluoreszenzlicht auf eine Blende (konfokale Blende / Pinhole) fokussiert, die sich genau in einer zur Fokusebene konjugierten Ebene befindet. Dadurch werden Fluoreszenzlichtanteile außerhalb des Fokus unterdrückt. Durch Variieren der Blendengröße kann die optische Auflösung des Mikroskops eingestellt werden. Hinter der Blende befindet sich ein weiterer dichroitischer Blockfilter (EF) der nochmals die Anregungsstrahlung unterdrückt. Nach Passieren des Blockfilters wird das Fluoreszenzlicht mittels eines Punktdetektors (PMT) gemessen.

Bei Verwendung einer Mehrphotonen-Absorption erfolgt die Anregung der Farbstofffluoreszenz in einem kleinen Volumen in dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion kann direkt nach dem Objektiv erfolgen (non descanned Detektion).

In einer weiteren Anordnung zur Detektion einer durch Mehrphotonen-absorption angeregten Farbstofffluoreszenz erfolgt weiterhin eine descanned Detektion, jedoch wird diesmal die Pupille des Objektives in die Detektionseinheit abgebildet (nichtkonfokal descanned Detektion).

Von einem dreidimensional ausgeleuchteten Bild wird durch beide Detektionsanordnungen in Verbindung mit der entsprechenden Einphotonen bzw. Mehrphotonen-Absorption nur die Ebene (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden.

Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, daß nur das vom jeweiligen Farbstoff ausgesendete Fluoreszenzlicht vom Punktdetektor gemessen wird.

In biomedizinischen Applikationen werden zur Zeit mehrere verschiedene Zellregionen mit verschiedenen Farbstoffen gleichzeitig markiert (Multifluoreszenz). Die einzelnen Farbstoffe können mit den Stand der Technik entweder aufgrund verschiedener Absorptionseigenschaften oder Emissionseigenschaften (Spektren) getrennt nachgewiesen werden.

Zum getrennten Nachweis erfolgt eine zusätzliche Aufspaltung des Fluoreszenzlichts von mehreren Farbstoffen mit den Nebenstrahlteilem (DBS) und eine getrennte Detektion der einzelnen Farbstoffemissionen in verschiedenen Punktdetektoren (PMT x).

Durchflußzytometer dienen der Untersuchung und der Klassifikation von Zellen und anderen Partikeln. Die Zellen befinden sich hierzu in einer Flüssigkeit gelöst und werden durch eine Kapillare gepumpt. Zur Untersuchung der Zellen wird ein Laserstrahl von der Seite in die Kapillare fokussiert. Die Zellen sind mit verschiedenen Farbstoffen oder fluoreszierenden Biomolekülen gefärbt. Gemessen wird das angeregte Fluoreszenzlicht und das rückgestreute Anregungslicht. Die Trennung des Fluoreszenzsignals der Probe von dem Anregungslicht erfolgt mittels dichroitischen Strahlteilern (MDB siehe Abb. 2). Der Stand der Technik ist in "Flow Cytometry and Sorting", Second Edition, M.R. Melamed, T. Lindmo, M.L. Mendelsohn, Eds. Wiley & Sons, Inc. New York, 1990, pp 81-107 beschrieben.

Aus dem rückgestreuten Signal kann die Größe der Zellen bestimmt werden. Mit Hilfe der Spektraleigenschaften der Fluoreszenz einzelner Zellen können verschiedene Zellen separiert/sortiert oder getrennt gezählt werden. Die Sortierung der Zellen erfolgt mit einem elektrostatischen Feld in verschiedene Kapillaren. Das Ergebnis, d.h. z.B. die Anzahl der Zellen mit Farbstoff A im Vergleich zu Zellen mit Farbstoff B wird häufig in Histogrammen dargestellt. Die Durchflußgeschwindigkeit beträgt typischerweise einige 10-100 cm/s. Deshalb wird eine hochempfindliche Detektion benötigt. Zur Einschränkung des Detektionsvolumens erfolgt nach dem Stand der Technik eine konfokale Detektion.

Statt eines Punktscanners werden nach dem Stand der Technik auch so genannte Linienscanner verwendet (Lit.: Corle, Kino; "Confocal Scanning Optical Microscopy and Related Imaging Systems"; Academic Press 1996). Der prinzipielle Aufbau entspricht im wesentlichen dem eines LSM nach <u>Abb. 2</u>. Jedoch wird statt eines Punktfokus eine Linie in die Probe (3) abgebildet und die zu untersuchende Probe nur noch in einer Richtung (x oder y) gescannt. Durch das Scannen einer Linie anstatt eines Punktes kann die Bildaufnahmerate erheblich vergrößert werden. Somit kann dieses Scanverfahren zur Beobachtung von schnell ablaufenden Prozessen in Echtzeit (Echtzeitmikroskopie) verwendet werden. Jedoch ist die optische axiale Auflösung ca. um einen Faktor 1.4 schlechter als beim Punktscanner.

In einer weiteren Anordnung zur Echtzeitmikroskopie nach dem Stand der Technik wird das komplette zu untersuchende Feld mittels einer aufgeweiteten Lichtquelle beleuchtet. Jedoch werden nur spezielle Punktmuster des gesamten zu scannenden Feldes durch eine sich schnell drehende Scheibe freigegeben. Diese Verfahren werden in der Literatur meist als Nipkow-Disk Verfahren bezeichnet (Lit.: Corle, Kino; "Confocal Scanning Optical Microscopy and Related Imaging Systems"; Academic Press 1996).

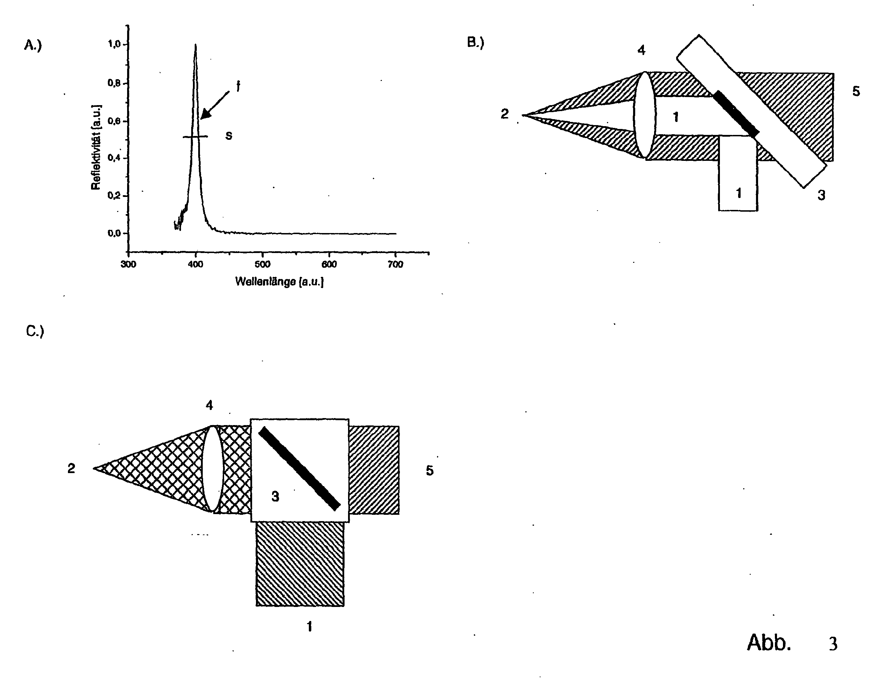

In einem weiteren Verfahren nach dem Stand der Technik, der sogenannten strukturierten Beleuchtung (siehe Abb. 3), nutzt man die Modulationstiefe der optischen Abbildung einer Amplitudenstruktur (z.B. Gitter) als Kriterium für die Tiefenschärfe. Das Bild der periodischen Struktur zeichnet sich durch die Frequenz der Modulation und die Phasenstellung (Bildphase) der Modulation aus. Durch eine Phasenverschiebung der Struktur senkrecht zur optischen Achse können unterschiedliche Projektionsszenarien erhalten werden. Um streifenfreie, tiefendiskriminierte optische Schnitte berechnen zu können, werden im allgemeinen mindestens 3 Phasenbilder PB bei 0°, 120° und 240° benötigt. Diese Phasenbilder (PB) werden anschließend zu einem (konfokalen) optischen Schnittbild in einem Image Prozessor mit folgender Formel verrechnet:

$$I_{Section}(x) = Const \bullet \sqrt{(I(x,0°) - I(x,120°))^2 + (I(x,120°) - I(x,240°))^2 + (I(x,0°) - I(x,240°))^2} \, ,$$

wobei I(x, Winkel) die Intensität am jeweiligen Pixel in dem entsprechenden Phasenbild beschreibt.

Die Aufzeichnung der 3 oder mehr Phasenbilder erfolgt im einfachsten Falle sequentiell. Dabei wird davon ausgegangen, dass sich die Probe während der Messung der Bilder nicht bewegt. Die so aus den Phasenbildern berechneten Schnittbilder bzw. Schnittstapel können anschließend mittels 3-D Auswertesoftware auf einem Standard PC und Monitor dargestellt werden.

Die Ortsauflösung entlang der optischen Achse hängt von der Wellenlänge des Lichtes, der numerischen Apertur des Objektivs und der Modulationsfrequenz ab.

Für eine detaillierte Beschreibung des Berechnungsalgorithmus wird auf T. Wilson et al.; "Method of obtaining optical sectioning by using structured light in a conventional microscope"; Optics Letters 22 (24) 1997 verwiesen.

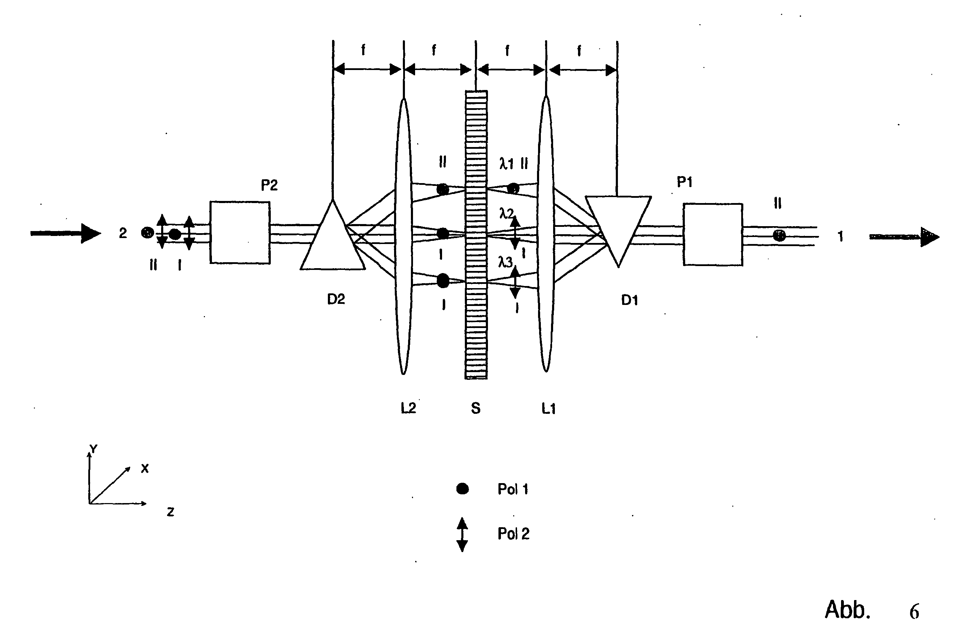

Anordnungen zum Screenen von Farbstoffen wie z.B. in so genannten Chipreadern ähneln in ihrem optischen Aufbau einem Laser Scanning Mikroskop. Sie scannen jedoch ein deutlich größeres Bildfeld zur Untersuchung der makroskopischen Proben, beispielsweise Screenen von Wirkstoffen auf einem Biochip. Die Kantenlänge der Scanfelder betragen hierbei einige 10 mm. Diese Scanfelder können z.B. durch eine Vergrößerung der Scanwinkel der Galvoscanner, durch eine Anordnung der Probe in einem Zwischenbild der Mikroskopanordnung beispielhaft in Fig. 6A oder durch eine spezielle Objektivanordnung (Makroobjektiv), die das Zwischenbild vergrößert auf die Probe abbildet, erzielt werden.

Die Trennung des Anregungslichtes vom von der Probe emittierten Licht erfolgt nach dem Stand der Technik durch spektrale Trennung unter Ausnutzung des Stokesshiftes, durch eine Einschränkung der numerischen Apertur der zur Probenbeleuchtung/-detektion verwendeten Optiken oder durch eine Aufteilung in verschiedene Polarisationsrichtungen.

Zur spektralen Trennung des Anregunglichts vom von der Probe emittierten Licht werden spezielle dichroitische Strahlteiler verwendet. Diese sind meist, wie in Abb. 3a gezeigt, so ausgelegt, dass sie möglichst effizient das Anregungslicht reflektieren und das von der Probe emittierte Licht möglichst effizient transmittieren. Dargestellt ist der Reflexionsgrad (Reflektivität) in Abhängigkeit von der Wellenlänge. Bei Verwendung von polarisiertem Anregungslicht beträgt die minimale spektrale Bandbreite (s) des reflektierten Wellenlängenbereiches ca. 10 nm, wobei die Flankensteilheit (f) meist >5 nm ist. Somit kann nach dem Stand der Technik mit einem dichroitischen Strahlteiler bei Verwendung einer Anregungswellenlänge, das von der Probe emittierte Licht, effizient getrennt werden. Jedoch verschlechtert sich die Effizienz bei simultaner Anregung mehrerer Farbstoffe mit mehreren Wellenlängen (Multifluoreszenzmikroskopie), da es meist zu einer spektralen Überlappung des Anregungslichtes und des emittierten Lichtes kommt. Weiterhin muß bei Verwendung verschiedener Farbstoffe mit verschiedenen Absorptionseigenschaften jedesmal ein spezieller Strahlteiler kreiert werden. In einem Weitfeldmikroskop erfolgt meist eine breitbandige Anregung der Probe mit Licht einer Weißlichtquelle, wobei sich teilweise die Anregungs- und die emittierte Strahlung spektral überlagern. Somit kommt es bei Verwendung von dichroitischen Strahlteilern nach dem Stand der Technik zu einer schlechten Effizienz der Trennung von Anregungslicht und emittierten Licht.

Die Trennung des Anregungslichtes vom emittierten Licht durch Einschränkung der numerischen Apertur der Probenbeleuchtungsoptik (4 in Abb. 3b) kann beispielsweise durch eine Beleuchtung der Probe mit eingeschränkter Apertur erfolgen, so dass nur die achsnahen Strahlen (1) in Richtung zur Probe (2) gelangen. Da die Emission in alle Raumrichtungen erfolgt, kann im verbleibenden Aperturbereich dieses Licht der Probe (2) aufgesammelt werden. Die Trennung des Anregungslichts vom emittierten Licht erfolgt anschließend mit einem teilweise voll verspiegelten (schwarzer Bereich) Planplatte (3). Die Detektion des von der Probe emittierten Lichts erfolgt in Strahlrichtung (5). Nachteilig bei den aus dem Stand der Technik (z.B. Pawley, Handbook of Confocal Microscopy, 1995) bekannten Verfahren zur Teilung der numerischen Apertur ist, dass durch die Einschränkung der Apertur zum einen die Effizienz der Detektion und zum anderen die optische Auflösung der Anordnung verschlechtert werden. Beide Parameter sind hierbei miteinander verkoppelt. Will man beispielsweise eine hohe Effizienz der Trennung erzielen, so verschlechtert sich die optische Auflösung.

In DE19842288 A1 wird eine Vorrichtung zur einstellbaren Einkopplung und / oder Detektion in einem Mikroskop beschrieben, die ein dispersives Element zur Wellenlängenseparierung aufweist.

Nachteilig bei allen Verfahren nach dem Stand der Technik ist, dass die Trennung des Anregungslichtes vom von der Probe emittierten Licht wellenlängenabhängig, d.h. nicht flexibel einstellbar, oder mit eingeschränkter Effizienz typischerweise 70% bis 90% - abhängig von den geforderten Spekraleigenschaften und der Anzahl der Beleuchtungslinien - erfolgt.

Erfindungsgemäß werden Verfahren und Anordnungen beschrieben mit denen besonders vorteilhaft das Anregungslicht von der in der Probe angeregten und /oder rückgestreuten Lichtstrahlung (z.B. Fluoreszenz / Lumineszenz) mit hoher Effizienz getrennt werden kann. Die Trennung ist hierbei gegenüber dem Stand der Technik spektral flexibel ohne Bewegung von mechanischen Komponenten einstellbar und ist deshalb insbesondere für den Einsatz in der Multifluoreszenzmikroskopie, d.h. zur simultanen Anregung verschiedener Farbstoffe besonders geeignet. Zusätzlich ist die Unterdrückung des Störlichtes um mindestens eine Größenordnung verbessert. Somit ist eine schnelle Umschaltung zwischen mehreren Anregungswellenlängen bzw. spektralen Detektionswellenlängenbereichen - so genanntes Multitracking wie in EP977069 A2 beschrieben besonderes einfach zu realisieren. Weiterhin ist es möglich das von der Probe in Richtung Detektor gestreute Licht von dem auf direktem Wege reflektierten Licht zu separieren und getrennt zu messen. Zusätzlich kann eine Messung der Polarisationsrichtung des von der Probe kommenden Lichtes erfolgen. Ein weiterer Vorteil ist, dass Laserleistungsschwankungen, verursacht durch instabile Kopplung in eine Glasfaser, durch Regelung verhindert werden können, so dass am Ort der Probe die Leistung konstant gehalten werden kann.

Die optische Auflösung wird durch die erfindungsgemäßen Anordnungen gegenüber Anordnungen zur Trennung des Anregungs- vom Detektionsstrahlengang nach dem Stand der Technik nicht verschlechtert. Weiterhin kann die Beleuchtungsverteilung am Ort der Probenwechselwirkung manipuliert werden. Dadurch ist es möglich so genannte Regions of Interest (ROI) in Echtzeit zu scannen. Zusätzlich können die aus der Weitfeldmikroskopie bekannten Beleuchtungsverfahren, wie z.B. eine schiefe Beleuchtung realisiert werden.

Die erfindungsgemäße Lösung ist in bildgebenden wie in analytischen Mikroskopiersystemen einsetzbar. Die Mikroskopsysteme sind bildgebende Systeme wie Laser-Scanning-Mikroskope zur dreidimensionalen Untersuchung von biologischen Präparaten mit einer optischen Auflösung bis zu 200 nm, Scanning-Nahfeld-Mikroskope zur hochaufgelösten Untersuchung von Oberflächen mit einer Auflösung von bis zu 10 nm. Fluoreszenzkorrelations-Mikroskope zur quantitativen Bestimmung von Molekülkonzentrationen und zur Vermessung von Molekül-Diffussionen. Weiterhin sind auf Fluoreszenzdetektion basierende Verfahren zum Screenen von Farbstoffen und Verfahren zur Durchflußzytometrie eingeschlossen.

In all den o.g. Systemen werden Fluoreszenzfarbstoffe zur spezifischen Markierung der Präparate eingesetzt. Die o.g. Aufgabe wird durch Verfahren und Anordnungen gemäß den unabhängigen Patentansprüchen gelöst. Bevorzugte Weiterbildungen sind Gegenstand der abhängigen Ansprüche.

Durch die erfindungsgemäßen Verfahren können die Anzahl der simultan einsetzbaren Farbstoffsignaturen, d.h. die Anzahl der simultan untersuchbaren Eigenschaften beispielsweise von Zellen erhöht werden. Bei sich stark überlappenden bzw. nahe beieinander liegenden Spektralsignaturen der einzelnen Farbstoffe muß nach dem Stand der Technik der detektierte Wellenlängenbereich oder die numerische Apertur zur getrennten Detektion der Fluoreszenzsignale einzelner Farbstoffe eingeschränkt werden. Dadurch verringert sich die Empfindlichkeit der Detektion, d.h. es kommt zu einem erhöhten Rauschen der Detektoren, da höhere Verstärkungen genutzt werden müssen. Dies wird durch die erfindungsgemäßen Verfahren und Anordnungen verhindert.

## Beschreibung der Erfindung

Im folgenden werden verschiedene Anordnungen näher erläutert, mit denen sich die in der Probe angeregte und/oder rückgestreute Lichtstrahlung (im folgenden Detektionslicht) besonders effizient vom Anregungslicht trennen läßt. Die Anordnungen eignen sich somit insbesondere zum schnellen Multitracking mit einer spektral angepassten flexiblen Trennung der Anregungsstrahlung vom Detektionslicht. Von der Probe emittierte Lichtstrahlung ist im folgenden Kontext Licht, welches vorzugsweise in einen großen Raumwinkel von der Probe abgestrahlt wird. Diese Lichtstrahlung ist nicht polarisiert (unpolarisiert). Dies sind insbesondere in der Probe angeregtes Fluoreszenz-, Lumineszenzlicht und rückgestreutes Licht.

*1. Wirkprinzip der Anordnung zur variablen Trennung des Anregungslichts vom Detektionslicht*

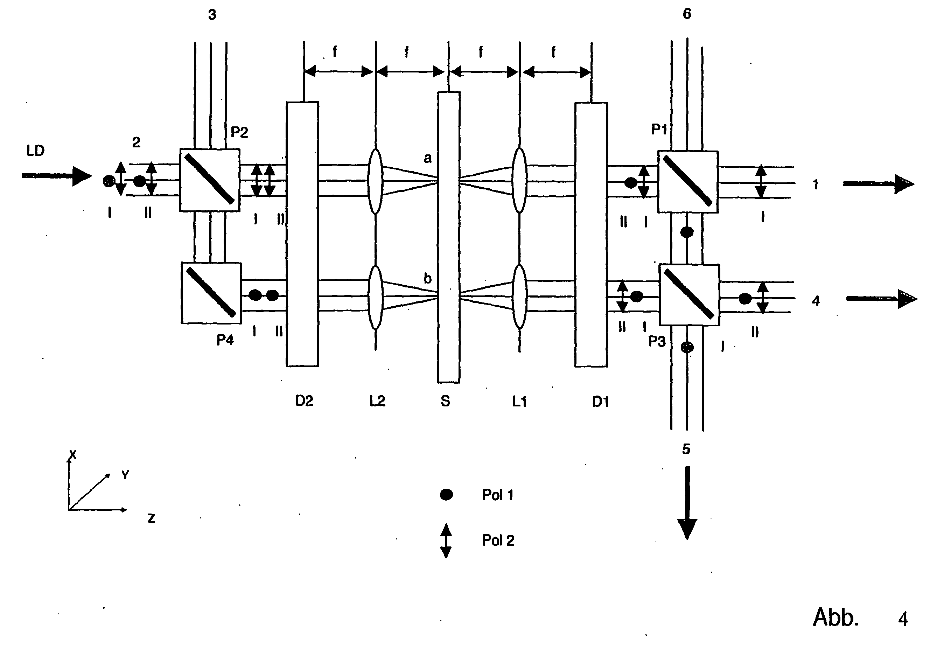

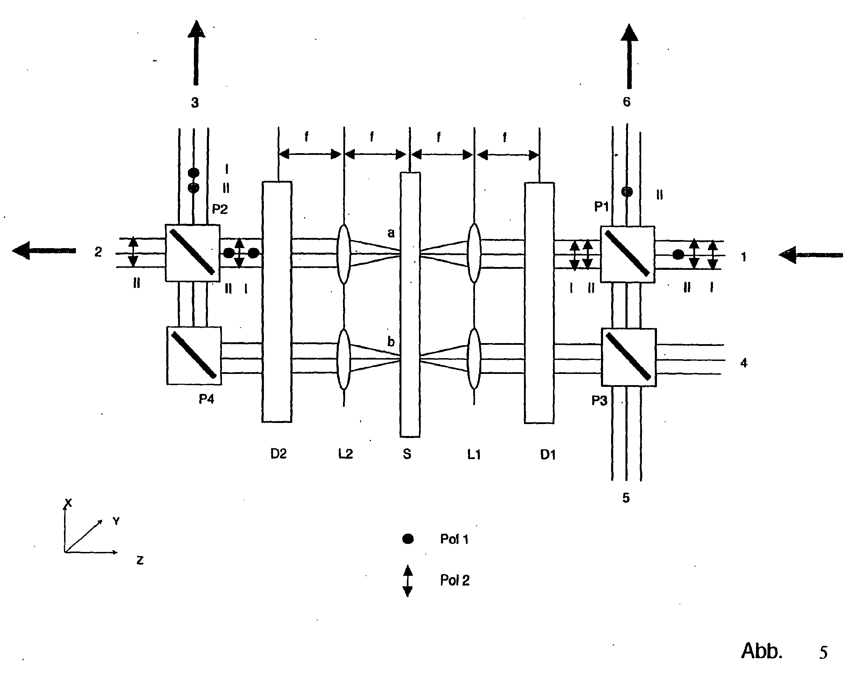

Abb. 4 zeigt schematisch den Aufbau der Anordnung zur Trennung des Anregungslichts vom Detektionslicht für den Detektionsstrahlengang und Abb. 5 für den Anregungstrahlengang. Die Anordnung besteht im wesentlichen aus mindestens 3 Polarisationsstrahlteilerwürfeln P1 bis P3. P4 kann ein weiterer Polarisationsstrahlteilerwürfel oder ein Spiegel sein. Als Polarisationsstrahlteilerwürfel können beispielsweise Glan-Laser-Polarisationsteiler, doppelbrechende Materialien oder speziell mikrostrukturierte Strahlteiler (z.B. MicroWires der Firma Moxtek, Inc.; Orem USA) eingesetzt werden. Zwischen je 2 Strahlteilerwürfeln (P2 und P1 bzw. P4 und P3) sind 2 dispersive Elemente (z.B. Prismen oder Gitter) D1 und D2 angeordnet, die die Lichtstrahlung räumlich spektral entlang der Y-Koordinate aufspalten bzw. wieder zusammenführen (siehe auch Abb. 6). Die Optiken L1 und L2 befinden sich im Abstand von jeweils ihrer Brennweite f, die auch für die Optiken unterschiedlich sein kann, zwischen den dispersiven Elementen D1 bzw. D2 und einem Element zur Drehung der Polarisation, beispielsweise einem Spatial Light Modulator (SLM) S. Die Optiken L1 und L2 gemeinsam mit den dispersiven Elementen D1 und D2 dienen der Erzeugung einer spektralen Fourierebene am Ort des SLM S. In dieser Ebene sind die spektralen Anteile des aus Richtung 2 oder Richtung 1 kommenden Lichtes räumlich entlang der y-Koordinate separiert. Das SLM (z.B. SLM640 der Firma Jenoptik, Germany) besteht aus einer Reihe von Streifen (beim SLM 640 sind es 640 Streifen), die einzeln angesteuert werden können. Je nach Ansteuerung des jeweiligen Pixels kann die Polarisationsrichtung des hindurchtretenden Lichtes variiert werden. SLM werden nach dem Stand der Technik in so genannten Pulse Shapern eingesetzt (Lit.:Stobrawa et al., Apl. Phy.B72, 627-630( 2002)). Hierbei erfolgt durch die Wirkung des SLM in Kombination mit dispersiven Elementen eine Phasenverzögerung und / oder eine Amplitudenänderung der Spektralanteile der Lichtquelle. Die Lichtquelle muss hierzu im Gegensatz zu den nachfolgend beschriebenen Anordnungen linear polarisiert sein, da sonst ein Energieverlust auftritt. Anstatt eines SLM kann beispielsweise auch eine Vielzahl einstellbarer lambda halbe Platten eingesetzt werden, die in der Fourierebene angeordnet werden.

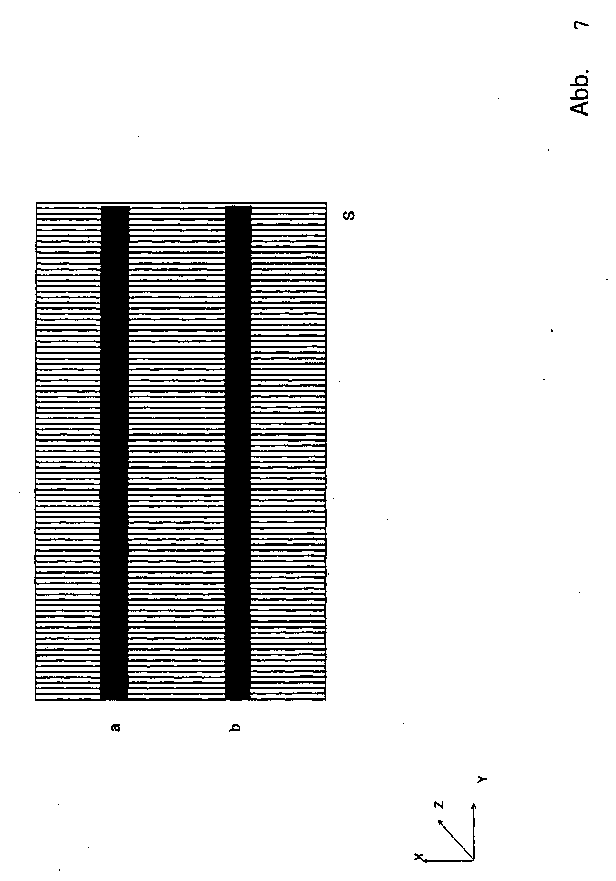

Der SLM wird in den Bereichen a und b (siehe Abb. 4,5,7) durchlaufen, wobei die Streifen entlang der x- Achse ausgerichtet sind. Abb. 6 zeigt die Anordnung aus den Abb. 4 und 5 in der yz-Ebene in der die spektrale Aufspaltung der Lichtstrahlung aufgrund der Wirkung der dispersiven Elemente D1 und D2 erfolgt. Durch die räumliche Separation der einzelnen Spektralanteile der Lichtstrahlung tritt diese durch verschiedene Pixel des SLM S hindurch. Abb. 7 zeigt den SLM S in der xy Ebene. Zu sehen sind die einzelnen Pixel (Streifen) entlang der y-Achse. Entlang dieser Achse erfolgt die spektrale Aufspaltung der Lichtstrahlung durch die dispersiven Elemente D1 bzw. D2. Die schwarzen Streifen entlang der y-Achse stellen die Bereiche a und b dar, durch die die verschiedenen Polarisationsrichtungen Pol1 und Pol2 hindurchtreten.

Das Wirkprinzip wird im folgenden anhand von Abb. 4 für den Detektionsstrahlengang erläutert. Unpolarisiertes Licht LD, das in Pfeilrichtung eingekoppelt wird, (2) wird am Polteiler P2 in zwei senkrecht zueinander stehende reflektierte Polarisationsanteile Pol1 (Kreise, Polrichtung in Blickrichtung) und durchgehende Polarisationsanteile Pol2 (Pfeile, Polrichtung in Pfeilrichtung) zerlegt. Die grauen (II) und die schwarzen (I) Symbole sollen Licht verschiedener Wellenlänge (z.B. schwarz (I) Fluoreszenz und grau (II) gestreutes Anregungslicht) darstellen. Pol1 der verschiedenen Wellenlängen ($\lambda$1, $\lambda$2, $\lambda$3) gelangt von P2 über P4 und Pol2 gelangt von P2 direkt durch D2 und L2 auf verschiedene Regionen des SLM S (siehe Abb. 6), und zwar Pol 1 auf Region b und Pol 2 auf Region a (siehe auch Fig.7). Der SLM dreht beispielsweise die Polarisation für die auf den Bereich $\lambda$2 und $\lambda$3 fallende Lichtstrahlung (schwarz (I) gezeichnet) um beispielsweise genau 90° (Abb. 4). Im folgenden wird die räumliche Separierung der spektralen Anteile durch L1 und D1 wieder aufgehoben und das Licht gelangt auf Polteiler P1 und P3, wobei die grauen (II) und die schwarzen (I) Anteile (d.h. in diesem Beispiel die Fluoreszenzs- und die Anregungsstrahlung) in beiden Armen P2-P1 bzw. P4-P2 senkrecht zueinander polarisiert sind (Abb. 4). Das Anregungslicht (grauen (II) Anteile) tritt somit durch die Koppelports 1 und 5 aus. Beide Polarisationsrichtungen des Fluoreszenzlichts (schwarzen (I) Anteile) treten gemeinsam durch den Koppelport 4 aus.

Mit Hilfe der Anordnung kann somit Lichtstrahlung, die durch den Eingang 2 eintritt, unabhängig von dem Polarisationszustand aufgrund ihrer verschiedenen spektralen Zusammensetzung in die verschiedenen Ausgänge 1, 5 und 4 räumlich separiert werden und somit getrennt optisch weiterverarbeitet werden.

Eine Drehung der Polarisation um Winkel ungleich von 90 Grad im Detektionsstrahlengang zur Fluoreszenzmessung ist möglich, aber weniger zweckmäßig, da dann Anteile des Fiuoreszenzlichts auch in den Koppelports 1 und 5 gelangen und somit nicht mit einem Detektor detektiert werden.

Das Wirkprinzip im Anregungsstrahlengang ergibt sich entsprechend und wird anhand von Abb. 5 erläutert. Unpolarisiertes Licht, das durch den Eingang 1 hindurchtritt (Pfeil) wird an P1 in 2 senkrecht zueinander stehenden Polarisationsanteile Pol1 und Pol2 zerlegt. Die grauen (II) und die schwarzen (I) Symbole sollen wiederum Licht verschiedener Wellenlänge (z.B. schwarz Anregungslicht der Wellenlänge $\lambda$1 und rot Anregungslicht der Wellenlänge $\lambda$2) darstellen. Pol1 gelangt direkt auf den Ausgang 6. Pol2 der verschiedenen Wellenlängen ($\lambda$1, $\lambda$2) gelangen von P1 über D1 und L1 auf verschiedene Regionen des SLM S (siehe Abb. 6). Der SLM dreht beispielsweise die Polarisation für das auf die Bereich $\lambda$2fallende Lichtstrahlung (schwarz gezeichnet) um beispielsweise genau 90° (Abb. 5). Für die Wellen- länge $\lambda$1 dreht der SLM die Wellenlänge um einen Winkel von beispielsweise ungleich als 90° (vorzugsweise im Bereich von 0° - 180°).

Im folgenden wird die räumliche Separierung der spektralen Anteile durch L2 und D2 wieder aufgehoben und das Licht gelangt auf P2. P2 separiert die Anteile je nach Polarisation in den Ausgang 3 bzw. in den Ausgang 2. In dem o.g. Beispiel wurde die Polarisation für die Wellenlänge $\lambda$2 durch den SLM genau um 90° verdreht. Deshalb wird alles Licht dieser Wellenlänge in den Ausgang 3 durch P2 geleitet. Im Gegensatz dazu wurde die Polarisation für die Wel- lenlänge $\lambda$1 nur um einen Winkel von ungleich 90° gedreht. Deshalb wird die Lichtleistung in die beiden Ausgänge 2 und 3 aufgeteilt. Das Teilungsverhältnis ergibt sich aus dem eingestellten Drehwinkel der Polarisation am SLM. Eine Drehung der Polarisation um Winkel ungleich von 90 Grad im Anregungsstrahlengang ist zur Abschwächung des Anregungslichts geeignet, da das Verhältnis der Leistungen in den Koppelports 2 und 3 entsprechend der Beziehung: $P_2/P_3$=tan (Drehwinkel) stufenlos eingestellt werden kann.

Mit Hilfe der Anordnung können somit Lichtstrahlung, die durch den Eingang 1 eintritt unabhängig von dem Polarisationsgrads aufgrund ihrer verschiedenen spektralen Zusammensetzung in die verschiedenen Ausgänge 2, 3 und 6 räumlich separiert werden und somit getrennt optisch weiterverarbeitet werden.

*2. Laserscanning Mikroskop*

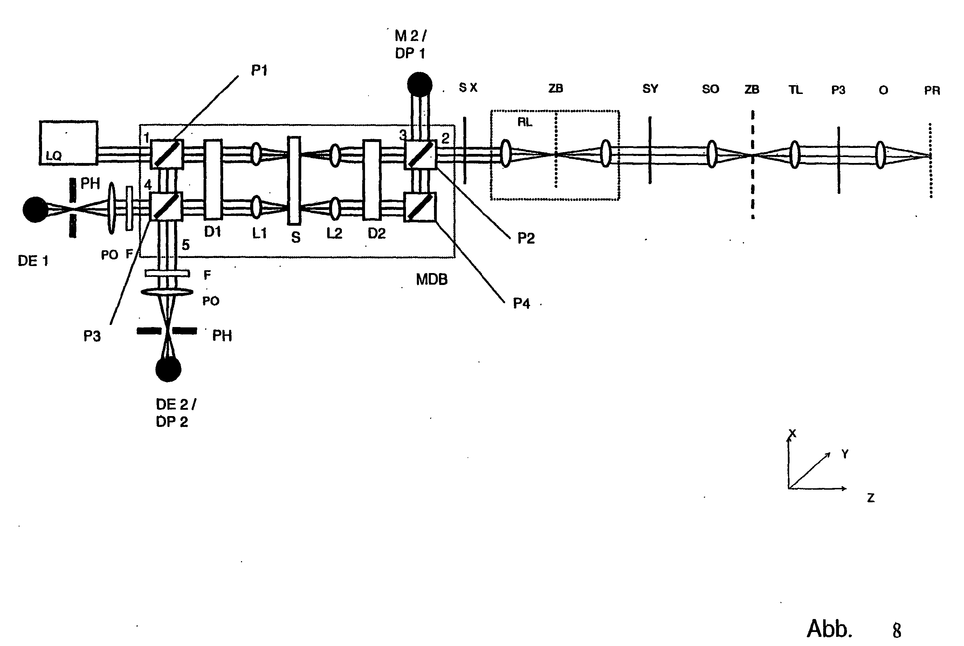

Abb. 8 zeigt schematisch die erfindungsgemäße Anordnung eines MDB ( Hauptfarbteilers) zur Separierung von Beleuchtungslicht ujnd Probenlicht für ein Laserscanning Mikroskop (LSM) in der xz-Ebene. Das unter 1 anhand Fig. 4-7 beschriebene Wirkprinzip kann analog in einem Mikroskop zur flexiblen Trennung der Fluoreszenz- von der Anregungsstrahlung eingesetzt werden. Bei einem LSM wird die Probe mit einem Punktfokus beleuchtet, der in der xy-Ebene mit Hilfe der Scanner SX und SY verschoben wird. Hierzu wird die vorzugsweise linear polarisierte Lichtquelle LQ in den MDB (siehe Abb. 5 und 6) über den Port 1 in P1 eingekoppelt. Das Licht der Lichtquelle LQ gelangt im folgenden durch das dispersive Element D1 und die Optik L1 auf vorzugsweise einen Pixel (Bereich a) des SLM S. Soll das Anregungslicht zur Probe gelangen, dann werden die entsprechenden Pixel nicht angesteuert, d.h. die Polarisationsrichtung des Lichtes wird nicht verändert und das Anregungslicht gelangt zum Ausgang 2 des MDB. Wird eine Ansteuerung der o.g. Pixel (Bereich a) des SLM vorgenommen, dann wird die Polarisationsrichtung des Anregungslichtes gedreht und somit gelangt je nach Polarisationsrichtung ein Teil des Lichtes zum Ausgang 2 und der verbleibende Anteil zum Ausgang 3. Am Ausgang 3 befindet sich eine Monitordiode M2 zur Bestimmung der Anregungslichtleistung, die als Regelgröße zum Ausgleich von Intensitätsschwankungen verursacht durch Kopplung in verschiedene Polarisationsrichtungen z.B. einer Glasfaser dienen kann. Weiterhin kann diese Betriebsart auch zum schnellen Abschalten bzw. Abschwächen von einzelnen Wellenlängen der Lichtquelle dienen.

Das in Richtung Ausgang 2 (siehe Abb. 5) gekoppelte linear polarisierte Anregungslicht gelangt auf die Scanner SX und SY, die sich in einer zur rückwärtigen Brennebene des Objektiv (P3) konjugierten Pupillenebenen der Mikroskopanordnung befinden, so dass die Scanner den beugungsbegrenzt fokussierten Anregungspunkt in der xy Ebene der Probe bewegen können, d.h. die Probe abrastern. Die Abbildung in die Probe erfolgt über die Scanoptik (SO), die Tubuslinse (TL) und das Objektiv (O). Die Relayoptik (RL) erzeugt die konjugierten Pupillenebenen SX und SY der Mikroskopanordnung. Die Relayoptik kann in speziellen Anordnungen nach dem Stand der Technik auch weggelassen werden. Z.B. kann sie bei einer Verkürzung des Abstandes zwischen SX und SY entfallen.

Das von der Probe emittierte Licht wird durch die Optik O (z.B. ein Mikroskopobjektiv) gesammelt und gemeinsam mit der Tubuslinse TL in eine Zwischenbildebene ZB der Mikroskopeinrichtung abgebildet. Von dort gelangt es über die Scanner SX / SY und die Relayoptik RL wiederum auf den Eingang 2 des MDB. Da das von der Probe emittierte Licht meist unpolarisiert ist wird es am Strahlteiler P2 (siehe auch Abb. 4) in zwei senkrecht zueinander stehende Polarisationsrichtungen Pol1 und Pol2 zerlegt. Wird in der Probe beispielsweise Fluoreszenzlicht angeregt, dann ist das Spektrum des Lichtes aufgrund des Stokesshifts gegenüber dem Anregungslicht verschoben. Somit gelangt durch die Wirkung der dispersiven Elemente D1 und D2 das Fluoreszenzlicht auf Pixel (Bereich b) des SLM, die nicht identisch den Pixeln des Bereichs a sind (siehe hierzu auch Abb. 6). Die Pixel des Bereichs b sind so angesteuert, dass die Polarisation vorzugsweise um 90° ggb. dem einfallenden Licht gedreht wird. Somit gelangt das Fluoreszenzlicht zum Ausgang 4 (siehe Abb. 4). Das rückgestreute unpolarisierte Anregungslicht gelangt jedoch zum Ausgang 5, da es auf die Pixel des Bereichs a fällt, und somit die Polarisation nicht gedreht wird.

Im Anschluß wird das Licht der Probe, das durch den Ausgang 4 des MDB gelangt mit Hilfe einer abbildenden Optik (PO) durch eine konfokale Blende (PH) fokussiert, wodurch Detektionslicht, das außerhalb des. Fokus entstand, unterdrückt wird. Bei einer nichtkonfokalen Detektion kann die Blende entfallen. Hinter der konfokalen Blende befindet sich ein Detektor (DE1), der die in der Probe angeregte Lichtstrahlung detektiert. Bei Aufnahme einer Fluoreszenz oder Lumineszenz kann zur zusätzlichen Unterdrückung des von der Probe rückgestreuten Anregungslichts bzw. zur Einschränkung des spektralen Detektionsbereichs ein Emissionsfilter (dichroitischer Filter) F eingeschwenkt werden.

Soll die Polarisation des emittierten Lichts der Probe detektiert werden (z.B. bei Bestimmung der Fluoreszenzanisotropie) dann kann dies mit den Detektoren DE1 und DE2 erfolgen. Die jeweilige Polarisation kann zusammengesetzt werden aus 2 Anteilen die senkrecht zueinander polarisiert sind. Die beiden senkrecht zueinander polarisierten Anteile werden getrennt mit DE1 und DE2 z.B. durch ein Einschalten einer nicht dargestellten Lambda-halbe-Platte zwischen P1 und P3 gemessen. Durch anschließende Bildung des Verhältnisses der Signale der Detektoren DE1 und DE2 kann auf die jeweilige Polarisation geschlossen werden. Eine weitere Methode ist die Ansteuerung des entsprechenden SLM Pixels so, dass das Signal in beiden Detektoren DE1 und DE2 gleich ist. Aus der Ansteuercharakteristik des SLM Pixels kann dann auf die entsprechende Polarisationsrichtung des Fluoreszenzlichts geschlossen werden. Hierdurch ist eine spektral aufgelöste Messung der Fluoreszenzanisotropie möglich, indem die Pixel des SLM sequentiell für die einzelnen Farben angepasst werden.

Das rückgestreute oder reflektierte Anregungslicht der Probe, das durch den Ausgang 5 des MDB gelangt ( ein Teil gelangt in Richtung der Lichtquelle LQ und wird ausgeblendet), kann auch mit Hilfe einer abbildenden Optik (PO) durch eine konfokale Blende (PH) fokussiert werden, wodurch Detektionslicht, das außerhalb des Fokus entstand, unterdrückt wird. Hinter der konfokalen Blende befindet sich ein Detektor (DE2), der die von der Probe rückgestreute Anregungsstrahlung detektiert.

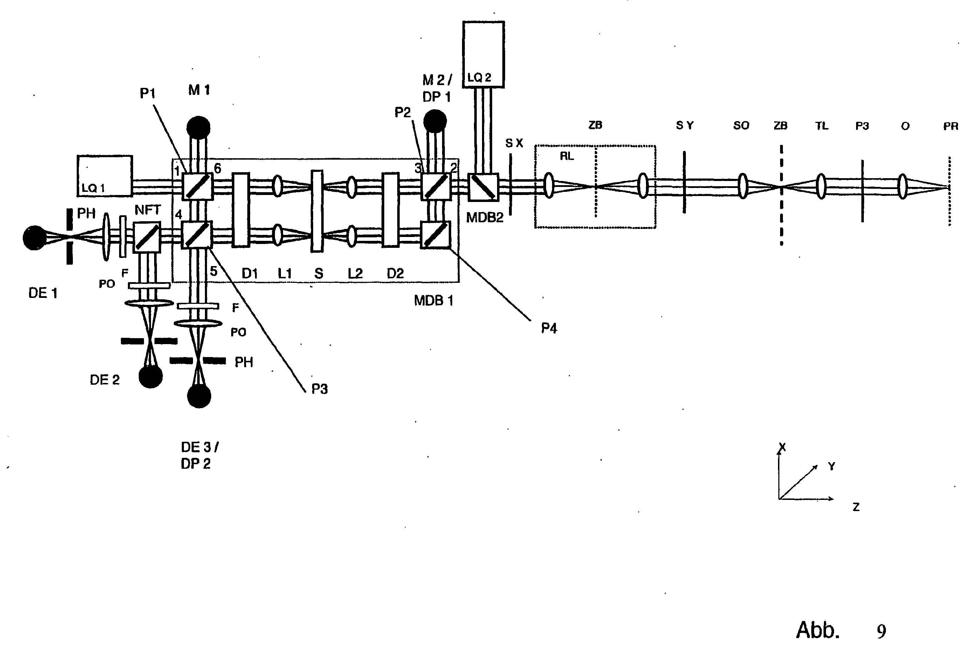

Abb. 9 zeigt schematisch eine weitere Ausbildung der erfindungsgemäßen Anordnung für ein Laserscanning Mikroskop (LSM) in der xz-Ebene in der eine weitere nicht durch den MDB1 laufende Lichtquelle LQ2 gekoppelt wird. Zusätzlich zu der bereits anhand Abb. 8 erläuterten Anordnung befindet sich am Ausgang 6 (siehe auch Abb. 5) eine weitere Monitordiode M1. Wird die Anregungstrahlung nicht nur in einer Polarisationsrichtung Pol1 sondern auch in der Polarisationsrichtung Pol 2 gekoppelt, dann misst M1 die gekoppelte Leistung. Weicht das Messsignal M1 von einem Sollwert ab, dann kann entsprechend der SLM so angesteuert werden, dass an M2 ein weiterer entsprechender Sollwert eingestellt wird. Durch diese Regelung können Schwankungen der Koppeleffizienz z.B. in eine Glasfaser, die sich zwischen der Lichtquelle LQ und dem Eingang 1 des MDB befindet ausglichen werden. Die Koppeleffizienz und damit die in Richtung Probe gekoppelte Lichtleistung kann beispielsweise durch Dejustage der Einkopplung in die Glasfaser oder durch eine Kopplung in verschiedene Polarisationsrichtungen bei der polarisationserhaltenden Glasfaser beeinflusst werden.

In der Fluoreszenzmikroskopie werden derzeit verschiedenste Lichtquellen aus einem breiten Spektralbereich verwendet. Aufgrund einer geringeren Transmission des SLM in bestimmten Wellenlängenbereichen z.B. bei UV-Lichtquellen (kleiner 400 nm) oder bei einer Multiphotonenanregung (größer 800 nm) ist die Kopplung der Lichtquellen durch den SLM nicht erwünscht. Diese Lichtquellen (LQ2) können entsprechend mit einem herkömmlichen Strahlteiler MDB2 zwischen dem Ausgang 2 und dem ersten Scanner z.B. SX mit den Lichtquellen LQ1, die den SLM durchlaufen, vereinigt werden. Die Detektion erfolgt bei diesen Lichtquellen meist im Wellenlängenbereich zwischen 400 und 800 nm, d.h. z.B. durch den SLM hindurch oder mit Detektoren nach dem Stand der Technik.

Das von der Probe emittierte Licht, das auf den Ausgang 4 des MDB 1 trifft, kann zusätzlich mit dirchroitischen Strahlteilern NFT nach dem Stand der Technik auf verschiedene konfokale Detektoren (z.B. DE1 und DE2) aufgespalten werden.

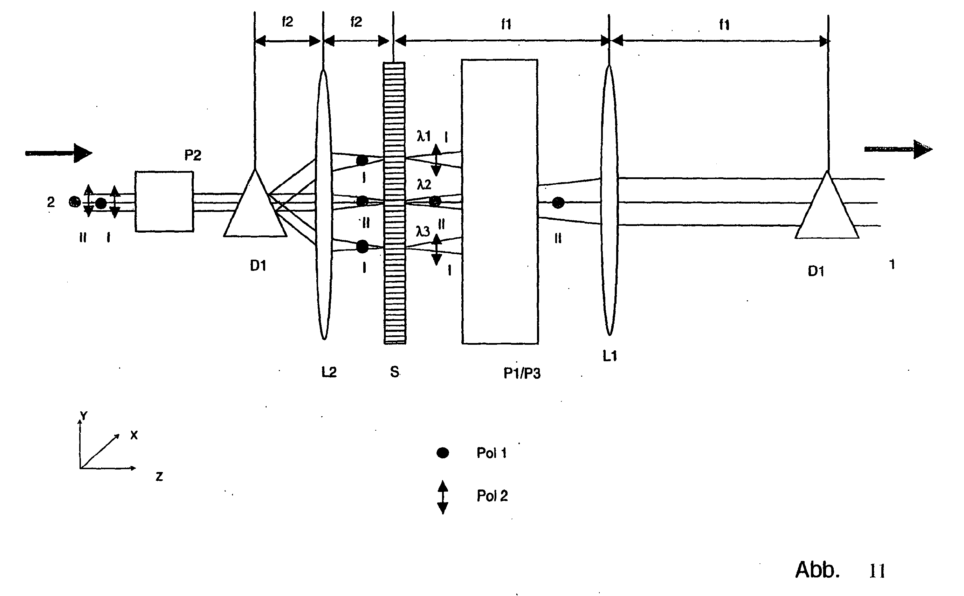

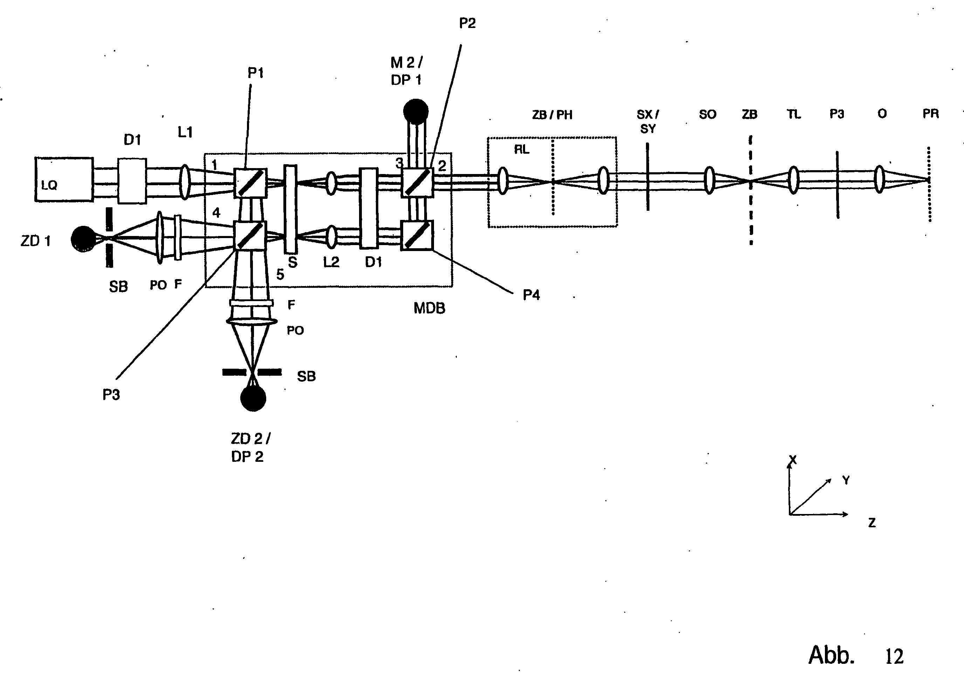

Abb. 11 und 12 zeigen eine nicht erfindungsgemäße Anordnung in einem Laser Scanning Mikroskop in der yz-Ebene und in der xz-Ebene. Die Wirkung der Komponenten ist entsprechend der oben beschriebenen Komponenten. Die im folgenden beschriebenen Modifikationen betreffen den Detektionsstrahlengang. Im Gegensatz zu den o.g. Anordnungen wird hier die zu detektierende Lichtstrahlung der Probe nach Durchgang durch P2,P4; der spektralen Trennung durch D1 und der Manipulation der Polarisationsanteile in S durch die Strahlteiler P1 und P3 (in der Zeichnung verdeckt hinter P1) von der Anregungsstrahlung abgetrennt. Wie dargestellt, sind P1 und P3 hier entlang der Y Achse ausgedehnt, so daß die gesamte spektrale Verteilung durch sie abgelenkt werden kann. Eine Zusammenführung der einzelnen Spektralanteile für die zu detektierende Lichtstrahlung erfolgt nicht. Statt dessen erfolgt eine spektral aufgelöste Messung des Detektionslichts, das an P1 eine andere Polarisation aufweist als das Anregungslicht und daher in Richtung der Detektion gelangt mit einem Zeilendetektor ZD1für Fluoreszenz bzw. ZD2 für gestreutes Licht, der wie in Abb. 12 dargestellt, in seiner Längsrichtung entlang der y-Koordinate angeordnet ist. Die Abbildung auf den Zeilendetektor erfolgt durch die Pinholeoptik PO durch eine konfokale Schlitzblende zur Einstellung der optischen Auflösung hindurch. Anstatt oder zusätzlich zur Schlitzblende kann auch im Zwischenbild PH/ZB eine Lochblende angeordnet sein. Die konfokale Blende PH kann auch in einem Zwischenbild ZB/PH zwischen den Scannern SX/SY und dem MDB durch Hinzunahme einer weiteren Relayoptik RL erfolgen. Hierdurch ergibt sich eine erhöhte Auflösung, da eine Lochblende statt einer Schlitzblende eingesetzt werden kann.

Mit Hilfe dieser Anordnung kann besonders vorteilhaft eine spektral aufgelöste Messung der Polarisationseigenschaften entsprechend den oben beschriebenen Verfahren erfolgen.

In allen erfindungsgemäßen Anordnungen können Ausgänge auch entsprechend vertauscht werden.

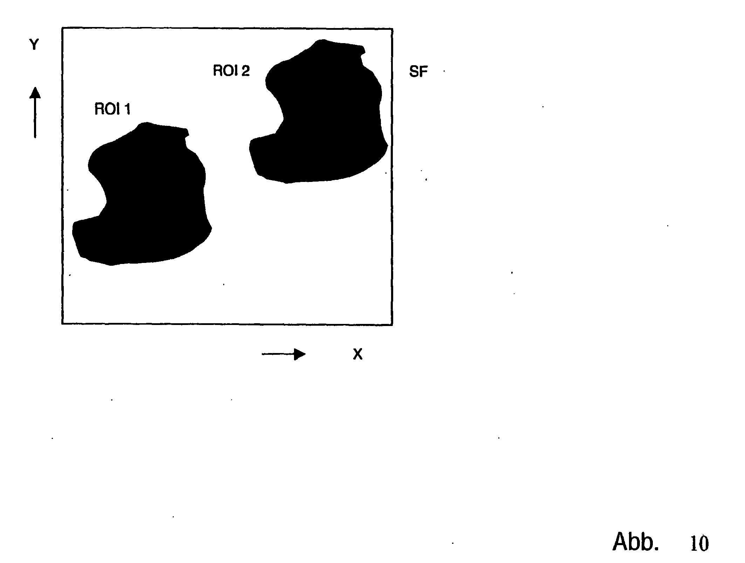

Die MDB aus den Abb. 4 bis 7 eignet sich auch für das Scannen von Regionen besonderen Interesses ROI (siehe EP977069A2) siehe Abb. 10. Hierbei wird das Laserlicht bestimmter Wellenlänge und Leistung nur für bestimmte durch den Nutzer vorgewählte Regionen freigegeben. In der Abb. 10 sind beispielhaft 2 Regionen ROI1 und ROI2 innerhalb des Scanfeldes eingezeichnet. Die Umschaltung der Wellenlänge bzw. die Einstellung der Anregungsleistung erfolgt durch entsprechende Ansteuerung des SLM, wodurch sich eine entsprechende Änderung des Polarisationszustandes ergibt.

Grundsätzlich kann die Funktion der dargestellten Scanner auch durch einen entsprechenden Scantisch (Objektscanner) ersetzt werden.

Die Erfindung findet besonders vorteilhafte Verwendung in einem Weitfeldmikroskop , einem Fluoreszenzmikroskop , einem punktscannenden Laser-Scanning - Mikroskop oder einem linienscannenden Laser - Scanning-Mikroskop , einem Durchflußzytometer , einem parallel konfokalen Mikroskop mit einem Lochraster im Beleuchtungs und/ oder Detektionsstrahlengang oder in einer mikroskopischen Anordnung zur Abbildung einer periodischen Struktur auf ein Objekt mi einer Phasenverschiebung der Struktur und der Aufzeichnung phasenverschobener Bilder des Objektes.

**Patentansprüche**

1. Verfahren zur einstellbaren Veränderung von Beleuchtungslicht und Probenlicht bezüglich seiner spektralen Zusammensetzung und / oder Intensität,
   in einem Mikroskop,
   wobei über Dispersionsmittel eine Aufspaltung des Beleuchtungs- und Probenlichtes erfolgt,
   **dadurch gekennzeichnet dass**

   (1) über erste Polarisationsmittel (P1) eine räumliche Trennung des Beleuchtungslichts in Strahlungsanteile unterschiedlicher Polarisation erfolgt,

(2) über erste, den ersten Polarisationsmitteln vor- oder nachgeordnete Dispersionsmittel (D1) eine spektrale räumliche Aufspaltung mindestens eines Strahlungsanteils erfolgt,

(3) der Polarisationszustandes mindestens eines spektralen Anteils des räumlich aufgespalteten Strahlunganteils verändert wird,

(4) über zweite Polarisationsmittel (P2) eine räumliche Zusammenführung der Strahlungsanteile unterschiedlicher Polarisation erfolgt,

(5) über zweite, den zweiten Polarisationsmitteln vor- oder nachgeordnete Dispersionsmittel (D2) eine räumliche Zusammenführung der bezüglich ihres Polarisationszustandes veränderten und nicht veränderten Strahlungsanteile erfolgt,

(6) wobei die genannten Mittel (P1-D2) in entgegengesetzter Richtung mit entgegengesetzter Wirkung vom Probenlicht des Mikroskopes durchlaufen werden.

2. Mikroskop mit einer optischen Anordnung zur Veränderung von Beleuchtungs- und Probenlicht, die Dispersionsmittel zur Aufspaltung des Beleuchtungs- und Probenlichtes enthält, **dadurch gekennzeichnet dass** die optische Anordnung enthält:

(1) erste Polarisationsmittel (P1) zur räumlichen Trennung des Beleuchtungslichts in Strahlungsanteile unterschiedlicher Polarisation,

(2) denen erste Dispersionsmittel (D1) zur spektralen räumlichen Aufspaltung mindestens eines Strahlungsanteils vor- oder nachgeordnet sind,

(3) Mittel (S) zur Veränderung des Polarisationszustandes mindestens eines spektralen Anteils des räumlich aufgespalteten Strahlunganteils,

(4) zweite Polarisationsmittel (P2) zur räumlichen Zusammenführung der Strahlungsanteile unterschiedlicher Polarisation,

(5) denen zweite Dispersionsmittel (D2) zur räumlichen Zusammenführung der bezüglich ihres Polarisationszustandes veränderten und nicht veränderten Strahlungsanteile vor- oder nachgeordnet sind,

(6) wobei die genannten Mittel (P1-D2) so angeordnet sind, dass sie in entgegengesetzter Richtung mit entgegengesetzter Wirkung vom Probenlicht des Mikroskopes durchlaufen werden.

3. Mikroskop nach der Anspruch 2, wobei eine Aufspaltung des Beleuchtungs und/oder Probenlichtes in senkrecht zueinander polarisierte Anteile (Pol1, Pol2) erfolgt.

4. Mikroskop nach einem der Ansprüche 2 oder 3, das zur zumindest teilweisen Detektierung des Probenlichts mindestens einen Detektor (DE1) umfasst.

5. Mikroskop nach einem der Ansprüche 2-4, das als Beleuchtungsquelle einen Laser umfasst.

6. Mikroskop nach einem der Ansprüche 2-4, das als Lichtquelle eine Weißlichquelle umfasst.

7. Mikroskop nach einem der Ansprüche 2-6, das eine Beleuchtungseinrichtung mit mehreren Wellenlängen umfasst.

8. Mikroskop nach einem der Ansprüche 2-7 , wobei von der Probe kommendes Fluoreszenzlicht und/ oder Lumineszenzlicht und / oder Phosphoreszenzlicht und / oder Streulicht detektiert wird.

9. Mikroskop nach einem der Ansprüche 2-8, das Mittel zur Veränderung des Beleuchtungslichtes während der Bildaufnahme in seiner Intensität und / oder spektralen Zusammensetzung umfasst, so dass unterschiedliche Probenorte unterschiedlich beleuchtet werden.

10. Mikroskop nach einem der Ansprüche 2-9, das eine der dispersiven Einheit zugeordnete Abbildungsoptik umfasst, die die Spektralanteile in eine Brennebene abbildet, wobei in der Brennebene Mittel zur Veränderung des Polarisationszustandes mindestens eines Teils des spektral räumlich aufgespaltenen Strahlungsanteils angeordnet sind.

11. Mikroskop nach Anspruch 10, das zur Veränderung des Polarisationszustandes einen SLM (Spatial Light Modulator) umfasst, der ansteuerbare Flüssigkristallzellen aufweist.

12. Mikroskop nach einem der Ansprüche 2-11, ausgebildet als Weitfeldmikroskop.

**13.** Mikroskop nach einem der Ansprüche 2-11, ausgebildet als Fluoreszenzmikroskop.

**14.** Mikroskop nach einem der Ansprüche 2-11 oder 13, ausgebildet als Punktscannendes Laser - Scanning - Mikroskop.

**15.** Mikroskop nach einem der Ansprüche 2-11 oder 13, ausgebildet als Linienscannendes Laser - Scanning - Mikroskop.

**16.** Mikroskop nach Anspruch 14 oder 15, das Mittel für eine descannte, teildescannte oder nicht descannte Detektion umfasst.

**17.** Mikroskop nach einem der Ansprüche 2-11 oder 13 , ausgebildet als parallel konfokales Mikroskop mit einem Lochraster im Beleuchtungs und /oder Detektionsstrahlengang.

**18.** Mikroskop nach einem der Ansprüche 2-11 oder 13, ausgebildet als Durchflusszytometer.

**19.** Mikroskop nach einem der Ansprüche 2-18, mit einer Anordnung zur Abbildung einer periodischen Struktur auf ein Objekt, Phasenverschiebung der Struktur und Aufzeichnung phasenverschobener Bilder.


**Claims**

**1.** Method of changing illumination light and sample light in an adjustable manner in terms of its spectral composition and/or intensity in a microscope,
wherein the illumination light and the sample light are split up via dispersion means, **characterised in that**

(1) a spatial separation of the illumination light into radiation components of different polarisation is performed by first polarisation means (P1),
(2) a spectral, spatial splitting of at least one radiation component is performed by first dispersion means (D1) which are disposed upstream or downstream of the first polarisation means,
(3) the polarisation state of at least one spectral part of the spatially split radiation component is changed,
(4) a spatial combination of the radiation components of different polarisation is performed by second polarisation means (P2),
(5) a spatial combination of the radiation components which are changed in terms of their polarisation state and which are unchanged in terms of their polarisation state is performed by second dispersion means (D2) which are disposed upstream or downstream of the second polarisation means,
(6) wherein the said means (P1-D2) are traversed in the opposite direction with the opposite effect by the sample light of the microscope.

**2.** Microscope having an optical arrangement for changing illumination light and sample light,
which contains dispersion means for splitting the illumination light and sample light, **characterised in that**
the optical arrangement contains the following:

(1) first polarisation means (P1) for the spatial separation of the illumination light into radiation components of different polarisation,
(2) first dispersion means (D1) for the spectral, spatial splitting of at least one radiation component which are disposed upstream or downstream of said first polarisation means,
(3) means (S) for changing the polarisation state of at least a spectral part of the spatially split radiation component,
(4) second polarisation means (P2) for the spatial combination of the radiation components of different polarisation,
(5) second dispersion means (D2) for the spatial combination of the radiation components which are changed in terms or their polarisation state and which are unchanged in terms of their polarisation state and which are disposed upstream or downstream of said second polarisation means,
(6) wherein the said means (P1-D2) are disposed in such a manner that they are traversed in the opposite direction and with the opposite effect by the sample light of the microscope.

**3.** Microscope as claimed in claim 2, wherein the illumination light and/or the sample light is/are split up into components (Poll, Pol2) which are polarised perpendicular to each other.

4. Microscope as claimed in any one of claims 2 or 3, comprising at least one detector (DE1) for the at least partial detection of the sample light.

5. Microscope as claimed in any one of claims 2-4, comprising a laser as the illumination source.

6. Microscope as claimed in any one of claims 2-4, comprising a white light source as the light source.

7. Microscope as claimed in any one of claims 2-6, comprising an illumination device having several wavelengths.

8. Microscope as claimed in any one of claims 2-7, wherein fluorescent light and/or luminescent light and/or phosphorescent light and/or scattered light coming from the sample is detected.

9. Microscope as claimed in any one of claims 2-8, comprising means for changing the intensity and/or spectral composition of the illumination light during image recording, so that different sample locations are illuminated differently.

10. Microscope as claimed in any one of claims 2-9, comprising imaging optics which are allocated to the dispersive unit and which image the spectral components into a focal plane, wherein means for changing the polarisation state of at least a part of the spectrally spatially split radiation component are disposed in the focal plane.

11. Microscope as claimed in claim 10, comprising an SLM (spatial light modulator) for changing the polarisation state, said SLM having controllable liquid crystal cells.

12. Microscope as claimed in any one of claims 2-11, formed as a widefield microscope.

13. Microscope as claimed in any one of claims 2-11, formed as a fluorescence microscope.

14. Microscope as claimed in any one of claims 2-11 or 13, formed as a point-scanning laser scanning microscope.

15. Microscope as claimed in any one of claims 2-11 or 13, formed as a line-scanning laser scanning microscope.

16. Microscope as claimed in claim 14 or 15, comprising means for a descanned, partially descanned or non-descanned detection.

17. Microscope as claimed in any one of claims 2-11 or 13, formed as a parallel confocal microscope having a hole matrix in the illumination beam path and/or the detection beam path.

18. Microscope as claimed in any one of claims 2-11 or 13, formed as a flow cytometer.

19. Microscope as claimed in any one of claims 2-18, having an arrangement for imaging a periodic structure on to an object, phase displacement of the structure and recording of phase-displaced images.


**Revendications**

1. Procédé de modulation de la lumière d'éclairage et de la lumière de l'échantillon en ce qui concerne leur composition spectrale et/ou leur intensité, dans un microscope,
sachant qu'il se produit une décomposition de la lumière d'éclairage et de la lumière de l'échantillon par le biais de moyens de dispersion,
**caractérisé en ce que**

(1) il se produit une séparation spatiale de la lumière d'éclairage dans des fractions de rayonnement à polarisation différente par le biais de premiers moyens de polarisation (P1),
(2) il se produit une décomposition spatiale spectrale d'au moins une fraction de rayonnement par le biais de premiers moyens de dispersion (D1) placés devant ou derrière les premiers moyens de polarisation,
(3) l'état de polarisation d'au moins une fraction spectrale de la fraction de rayonnement décomposée dans l'espace est modifié,
(4) il se produit un regroupement spatial des fractions de rayonnement à polarisation différente par le biais de seconds moyens de polarisation (P2),
(5) il se produit un regroupement spatial des fractions de rayonnement modifiées et non modifiées en ce qui concerne leur état de polarisation par le biais de seconds moyens de dispersion (D2) placés devant ou derrière les seconds moyens de polarisation,
(6) sachant que les moyens cités (P1-D2) sont traversés par la lumière de l'échantillon du microscope dans le sens inverse, avec un effet inverse.

2. Microscope avec un dispositif optique de modulation de la lumière d'éclairage et de la lumière de l'échantillon qui comporte des moyens de dispersion pour la décomposition de lumière d'éclairage et de lumière de l'échantillon, **caractérisé en ce que** le dispositif optique comporte :

(1) des premiers moyens de polarisation (P1) pour la séparation spatiale de la lumière d'éclairage dans des fractions de rayonnement à polarisation différente,
(2) devant ou derrière lesquels sont placés des premiers moyens de dispersion (D1) pour la décomposition spatiale spectrale d'au moins une fraction de rayonnement,
(3) des moyens (S) de modification de l'état de polarisation d'au moins une fraction spectrale de la fraction de rayonnement décomposée dans l'espace,
(4) des seconds moyens de polarisation (P2) pour le regroupement spatial des fractions de rayonnement à polarisation différente,
(5) devant ou derrière lesquels sont placés des seconds moyens de dispersion (D2) pour le regroupement spatial des fractions de rayonnement modifiées et non modifiées en ce qui concerne leur état de polarisation,
(6) sachant que les moyens cités (P1-D2) sont disposés de telle sorte qu'ils sont traversés par la lumière de l'échantillon du microscope dans le sens inverse, avec un effet inverse.

3. Microscope selon la revendication 2, sachant qu'il se produit une décomposition de la lumière d'éclairage et/ou de la lumière de l'échantillon dans des fractions polarisées perpendiculaires les unes par rapport aux autres (Pol1, Pol2).

4. Microscope selon l'une quelconque des revendications 2 ou 3 qui comprend au moins un détecteur (DE1) pour la détection au moins partielle de la lumière d'échantillon.

5. Microscope selon l'une quelconque des revendications 2 à 4 qui comprend un laser comme source d'éclairage.

6. Microscope selon l'une quelconque des revendications 2 à 4 qui comprend une source de lumière blanche comme source lumineuse.

7. Microscope selon l'une quelconque des revendications 2 à 6 qui comprend un dispositif d'éclairage avec plusieurs longueurs d'onde.

8. Microscope selon l'une quelconque des revendications 2 à 7, sachant que la lumière fluorescente et/ou la lumière luminescente et/ou la lumière phosphorescente et/ou la lumière diffuse provenant de l'échantillon sont détectées.

9. Microscope selon l'une quelconque des revendications 2 à 8 qui comprend des moyens de modification de la lumière d'éclairage pendant la prise de vue, au niveau de son intensité et / ou de sa composition spectrale, de sorte que des emplacements d'échantillon différents sont éclairés différemment.

10. Microscope selon l'une quelconque des revendications 2 à 9 qui comprend un dispositif optique d'imagerie associé à l'unité dispersive qui représente les fractions spectrales sur un plan focal, sachant que des moyens de modification de l'état de polarisation d'au moins une partie de la fraction de rayonnement spectralement décomposée dans l'espace sont disposés sur le plan focal.

11. Microscope selon la revendication 10 qui comporte un modulateur spatial de lumière (SLM, Spatial Light Modulator), pour la modification de l'état de polarisation, qui présente des cellules à cristaux liquides pouvant être excitées.

12. Microscope selon l'une quelconque des revendications 2 à 11, réalisé sous la forme d'un microscope grand champ.

13. Microscope selon l'une quelconque des revendications 2 à 11, réalisé sous la forme d'un microscope fluorescent.

14. Microscope selon l'une quelconque des revendications 2 à 11 ou 13, réalisé sous la forme d'un microscope laser à balayage point par point.

**15.** Microscope selon l'une quelconque des revendications 2 à 11 ou 13, réalisé sous la forme d'un microscope laser à balayage ligne par ligne.

**16.** Microscope selon la revendication 14 ou 15 qui comprend des moyens de détection descannée, partiellement descannée ou non descannée.

**17.** Microscope selon l'une quelconque des revendications 2 à 11 ou 13, réalisé sous la forme d'un microscope parallèlement confocal comportant une trame à trous dans la trajectoire du rayon d'éclairage et/ou de détection.

**18.** Microscope selon l'une quelconque des revendications 2 à 11 ou 13, réalisé sous la forme d'un cytomètre en flux.

**19.** Microscope selon l'une quelconque des revendications 2 à 18, comportant un dispositif de représentation d'une structure périodique sur un objet, de déphasage de la structure et d'enregistrement d'images déphasées.

UVA

Emission

a.)

NIR

NIR

Emission

b.)

EP 1 396 739 B1

Abb. 1

Mikroskop        Laser Scanning Module        Lichtquellen

Abb.    2

A.)

B.)

C.)

EP 1 396 739 B1

Abb.    3

Abb. 4

Abb. 5

EP 1 396 739 B1

Abb. 6

EP 1 396 739 B1

a

b

S

X
Z
Y

Abb. 7

Abb. 8

Abb. 9

EP 1 396 739 B1

Abb. 10

Abb. 11

Pol 1

Pol 2

EP 1 396 739 B1

Abb. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19702753 A1
- DE 19842288 A1
- EP 977069 A2

**In der Beschreibung aufgeführte Nicht-Patentliteratur**

- **PAWLEY.** Handbook of biological confocal Microscopy. Plenum Press, 1995
- **CORLE ; KINO.** Confocal Scanning Optical Microscopy and Related Imaging Systems. Academic Press, 1996
- Flow Cytometry and Sorting. Wiley & Sons, Inc, 1990, 81-107
- **T. WILSON et al.** Method of obtaining optical sectioning by using structured light in a conventional microscope. *Optics Letters,* 1997, vol. 22 (24
- **PAWLEY.** *Handbook of Confocal Microscopy,* 1995
- **STOBRAWA et al.** *Apl. Phy,* 2002, vol. B72, 627-630